# EUROPEAN PATENT APPLICATION

(11) **EP 4 169 671 A1**
(43) Date of publication of application: **26.04.2023**
(21) Application number: 21204402.8
(22) Date of filing: 25.10.2021
(51) Int. Cl.: B25J 9/16, G05B 19/423

(54) **SAFETY SYSTEM AND METHOD FOR TEACHING A ROBOT**

(71) Applicant: Techman Robot Inc., Taoyuan City 33383 (TW)
(72) Inventor: Wang, Pei-Jui, 33383 Taoyuan City (TW); Kuo, Yao-Ting, 33383 Taoyuan City (TW); Huang, Shih-Jung, 33383 Taoyuan City (TW)
(74) Representative: Straus, Alexander

(57) **Abstract**

A safety system (1) presets a corresponding safety module (14) and a safety function suitable for each operation mode. When a mode switching device (17) switches among the operation modes of the robot (11), the safety system (1) starts the corresponding safety module (14) and the safety function for the chosen operation mode to ensure the special safety module (14) and safety function for each operation mode.

## Description

### Field of the Invention

The present invention relates to a safety system of a robot and a method thereof, and in particular, to a safety system and a method thereof for protecting a user during teaching a robot when switched from an auto mode to a hand-guiding mode or a non-hand-guiding mode.

### Background of the Invention

As the robotics technology continues to advance, factories employ robots to assist operators to achieve fast processing, assembly, and manufacturing and to improve factory production efficiency. However, the abnormal operations of the robots can seriously affect the safety of the operators. Therefore, various countries have set strict safety regulations for the operators to work safely.

### Summary of the Invention

The present disclosure aims at providing a safety system for teaching a robot and a safety method of teaching a robot. This is achieved by the safety system according to claim 1 and the safety method according to claim 9. The dependent claims pertain to corresponding further developments and improvements.

The embodiments of the invention provide a safety system for teaching a robot. The safety system switches between various operation modes of the robot via a mode switching device and employs an enabling device to enable different preset safety modules and safety functions corresponding to each teaching mode, to achieve simple switching between multiple operation modes.

Further, the embodiments of the invention provide a safety method for teaching a robot. The method includes utilizing preset safety modules and preset safety functions corresponding to each operation mode to switch the robot and construct a safety system suitable for each operation mode, to ensure the safety of users.

In addition, the embodiments of the invention provide another safety method for teaching a robot. The method includes when an operation mode is switched from various operation modes to a hand-guiding mode, maintaining safety modules and safety functions dedicated to the hand-guiding mode, to enhance the safety of users.

According to embodiments of the invention, the safety system for teaching the robot includes the robot having a plurality of segments and a movable end, each segment being provided with an actuator and a position sensor coupled to a controller, the controller being configured to control the actuator and the position sensor of the segment, and move the end of the robot. The safety system further includes an enabling device coupled to the controller, a safety module provided in the controller, electrically or communicatively coupled to the enabling device, and configured to transmit an electrical signal or a communication signal according to a state of the enabling device, an OFF state of the enabling device setting the robot into a safe state, and an ON state of the enabling device aborting the safe state of the robot, a safety function unit provided in the controller, electrically or communicatively coupled to the safety module, and configured to set the robot into the safe state upon detecting that a safety function of the robot exceeds a predetermined limit, a mode switching device, electrically or communicatively coupled to the controller, the safety module and the safety function unit, and configured to switch an operation mode of the robot. The mode switching device switches between operation modes of the robot, the operation modes comprise a hand-guiding mode, an auto mode, a manual reduced speed mode, and a manual high speed mode. The safety module and the safety function unit enable preset safety modules and preset safety functions corresponding to each operation mode.

In the embodiment, the safety module is electrically or communicatively coupled to the position sensor of each segment of the robot and receives signals from the respective position sensors to monitor the robot. The safety module operates in at least one of the following safe state types: a type 0 safe state providing a power-off shutdown function, in which power to an actuator is shut off when entering the safe state, a type 1 safe state providing an advanced power-off shutdown function, in which the power to the actuator is shut off after the robot completes a speed reduction operation in a (fixed) period of time upon the controller receiving a speed reduction command in the safe state, and a type 2 safe state providing a non-power-off shutdown function, in which standstill monitoring is enabled to continuously monitor the position sensor upon the controller receiving a speed reduction command in the safe state and the robot completing a speed reduction operation in the safe state, and the power to the actuator is shut off upon detecting a movement of the robot. In some embodiments, the safety function unit enables at least one of the following safety functions: limiting an angle of movements of the segments, limiting a spatial position of the end of the robot, limiting a force, and limiting a speed.

In some embodiments, the mode switching device of the safety system for teaching the robot may switch between operation modes including a teaching mode and an auto mode, the teaching mode including a hand-guiding mode, a manual reduced speed mode, and a manual high speed mode. The mode switching device may be provided in the teaching device of the robot, or external to the controller. The mode switching device may be a multi-position rotary switch, and the mode may be indicated by a position of the rotary switch, or displayed by a light signal. The mode switching device may be a software switch, a combination of hardware switches, or a combination of software and hardware switches.

In the embodiment, the safety method for teaching the robot further includes presetting enablement states and limit parameters of the safety modules and the safety functions according to requirements of each operation mode of the robot. The safety method for teaching the robot further includes switching the mode, determining whether the switched mode is the teaching mode such as the manual reduced speed mode or the manual high speed mode, enabling a preset safety function corresponding to the manual reduced speed mode or the manual high speed mode, suspending the robot and setting the same to a safe state, enabling the enabling device, detecting an ON state of the enabling device, quitting the safe state of the robot, and performing a teaching operation on the robot. The safety method for teaching the robot further includes if the robot has completed the operation, then terminating the operation, and if the robot has not completed the operation, returning to the switched mode to continue the operation.

In some embodiments, the safety method for teaching the robot further includes if the switched mode is an auto mode, activating a preset safety function corresponding to the auto mode, monitoring the robot, and performing an automatic operation of the robot. In some embodiments, the safety method for teaching the robot further includes if the switched mode is a hand-guiding mode, pressing the enabling device continuously to exit the safe state and enabling the hand-guiding function. The safety method for teaching the robot further includes if the mode is switched from the manual reduced speed mode, the manual high speed mode, or the auto mode to the hand-guiding mode, the robot recording a breakpoint of an operation program, and activating a preset safety module and a preset safety function of the hand-guiding mode, upon completion of manual the robot for teaching an operation, switching back to a previous operation mode and proceeding the operation program from the breakpoint.

### Brief Description of the Drawings

In the following, the disclosure is further illustrated by way of example, taking reference to the accompanying drawings. Thereof
FIG. 1 is a schematic diagram of a safety system for teaching a robot according to an embodiment of the present invention;
FIG 2 is a schematic diagram of control functions of the safety system according to an embodiment of the present invention;
FIG. 3 is a schematic diagram of switched modes using a mode switching device according to an embodiment of the present invention;
FIG. 4 is a flowchart of a safety method for teaching a robot according to an embodiment of the present invention; and
FIG. 5 is a schematic diagram of teaching a robot by hand-guiding in the related art.

### Detailed Description

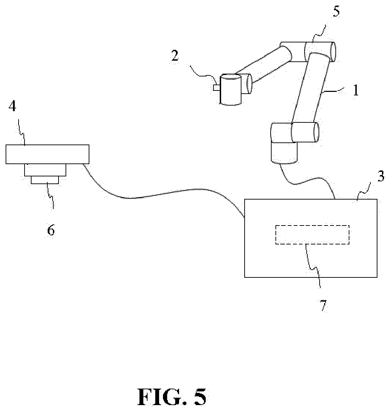

Please refer to FIG. 5. In the related art, to teach the robot 1 to operate, a hand-guiding button 2 is set at an end of the robot 1. The hand-guiding button 2 is usually designed as a hold-to-run button or a software switch. The hand-guiding button 2 is electrically or communicatively coupled to the controller 3 of the robot 1. When the teaching device 4 sets the robot 1 to a teaching mode, if a user presses the hand-guiding button 2, the controller 3 will be set off by a signal to switch the robot 1 from a static state to a hand-guiding mode. The hand-guiding mode has been implemented in several ways in the related art. For example, an encoder and a motor current sensor of an actuator in each segment 5 of the robot 1 perform calculations and compensations to determine a force applied to each joint or a hand-guiding force applied to the end, thereby controlling the robot 1 to follow a hand-guiding operation. The robot 1 is taught about how to operate by hand-guiding the robot 1 to recorded positions or by recording a path of hand-guiding. When the hand-guiding button 2 is released, the robot 1 is exited from the hand-guiding mode and returns to a static state.

To comply with the requirements of the safety standard ISO 10218-1, a teaching device 4 of the robot 1 in the related art is equipped with an enabling device in the teaching mode to protect the operator. The enabling device 6 is usually located on the teaching device 4 and is a three-position switch including 3 pressing stages, namely a fully released position, an intermediate position, and a pressed position, of which only the intermediate position may enable the robot 1 to perform the teaching operation. When in the fully released position or the pressed position, an electrical or communication signal is transmitted to the controller 3, a safety system 7 interrupts the teaching operation to stop the robot 1 from moving and keep the robot 1 not acting rashly via standstill monitoring when the actuator is still powered. If it is found that the robot is moving, the safety system 7 will cut off the power to the actuator of the robot 1 to ensure the safety of the operator during the teaching operation.

However, in the teaching mode of the related art, robots need to be hand-guided to work, work collaboratively or perform a variety of teaching tasks such as crawling, trial operation, and other non-hand-guiding tasks. The various teaching tasks need to meet different safety requirements. In addition, a hand-guiding operation is used in auto mode. Applying a single operation of a safety system to all teaching operations may result in severe injuries to users. Therefore, a safety system and a method of hand-guiding a robot are in need.

To meet the requirements of the safety standard ISO 10218-1, a robot is configured to operate in the following operation modes: an auto mode, and a manual mode (or a teaching mode). The teaching mode comprises a manual reduced speed mode and a manual high speed mode. In the auto mode, the robot automatically runs a program. The auto mode is used in production automation operations, and the user is a production line operator. The manual or teaching mode is not used in the production automation operation, and is used for the programming and testing a robot program, and the user is an automation engineer. The manual reduced speed mode is used for guiding to a specific point, programming, and low-speed trial operations, while the manual high speed mode is only used for program trial operations, achieving a full speed trial operation of the program, similar to the auto mode but requiring additional safety protection device, such as pressing an enable device on a teaching device to ensure safety. A common mode switching device such as a three-position rotary switch is used to switch between conventional operation modes such as an auto mode (AUT), a manual reduced speed mode (T1), and a manual high speed mode (T2). A hand-guiding function is only defined as a collaborative function in ISO 10218-1, but it is not clearly stated what purpose it is used for. The Gein collaborative robot technology is still in the development stage, and the safety regulations have not yet defined for the technology of hand-guiding. At present, hand-guiding has been used in a variety of operation modes, typically used in the manual mode or the teach mode to assist an automation engineer in teaching locations or hand-guiding a path, and also used in the auto mode to facilitate production line operators to perform the following tasks: a guided movement (e.g., hand-guiding the robot to the next starting point of an operation), a guided demonstration (e.g., hand-guiding an operation path), a hand-guided cooperation (e.g., the robot lifts a weight and a user guides the robot to a placement position), the hand-guided operations in the auto mode are not the teaching behavior specified in the safety standard, but hand-guided operations in an automatic production process. Therefore, hand-guiding has been widely used in the auto mode and the manual or teaching mode.

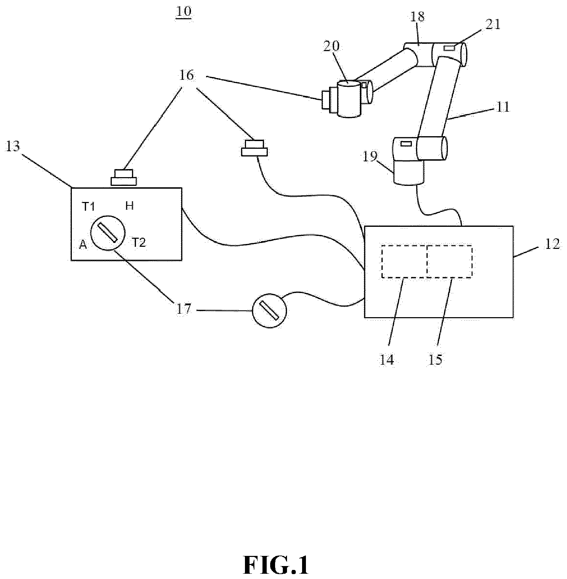

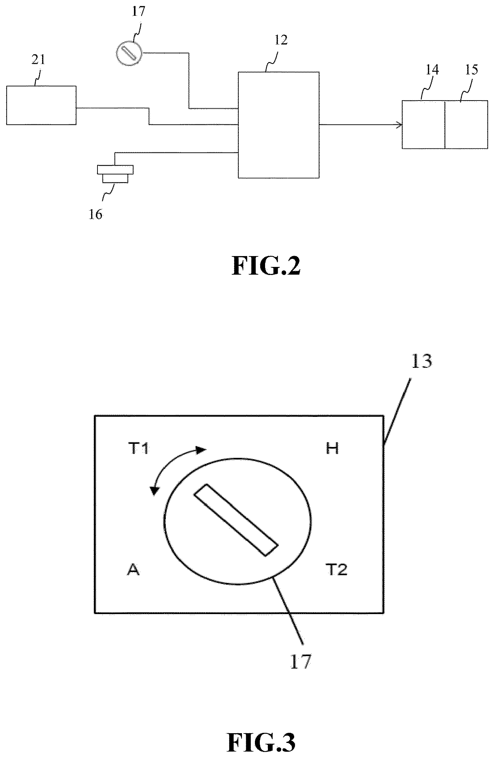

Please refer to FIGs. 1 to 3. FIG. 1 is a schematic diagram of a safety system for teaching a robot according to an embodiment of the present invention, FIG 2 is a schematic diagram of control functions of the safety system according to an embodiment of the present invention, and FIG. 3 is a schematic diagram of switched modes using a mode switching device according to an embodiment of the present invention. In FIG. 1, a safety system 10 includes a robot 11, a controller 12, a teaching device 13, a safety module 14, a safety function unit 15, an enabling device 16, and a mode switching device 17. The robot 11 has a plurality of segments 18. One end of the robot 11 is a fixed base 19, and the other end of the robot 11 is a movable end 20. The robot 11 is coupled to the controller 12, and the controller 12 includes the safety module 14 and the safety function unit 15. The controller 12 controls the end 20 of the robot 11 to move by controlling an actuator and a position sensor 21 in each segment 18. The controller 12 is coupled to the teaching device 13 to program the robot 11 or operate the robot 11. In the embodiment, the enabling device 16 may be installed onto the teaching device 13 or the robot 11 such as the end 20, or a user may connect an independent enabling device 16 external to the controller 12, and the enabling device 16 may be installed in one or more of the above locations. The mode switching device 17 may be built-in in the teaching device 13 of the robot 11, or external to the controller 12.

In FIG. 2, the safety module 14 and the safety function unit 15 are electrically or communicatively coupled to the enabling device 16, the mode switching device 17 and the position sensor 21 via the controller 12. The enabling device 16 may be operated in an ON state or an OFF state. When the enabling device 16 is operated in the ON state, the safety module 14 may abort a safe state of the robot 11. When the enabling device 16 is operated in the OFF state, the safety module 14 may suspend the robot 11 and set the robot 11 to the safe state. The safety module 14 is electrically or communicatively coupled to the position sensor 21 of each segment 18 of the robot 11 and receives signals from the respective position sensors 21 to monitor the activity state of the robot 11.

The safety module 14 may selectively set the robot 11 to one of three types of the safe state. The three types of the safe state include types 0, 1, and 2. The type 0 safe state provides a power-off shutdown function, in which when the safety module 14 determines that the robot 11 should enter the safe state, the safety module 14 shuts off the power to the actuator. The type 1 safe state provides an advanced power-off shutdown function, in which when the safety module 14 determines that the robot 11 should enter the safe state, the power of the actuator is shut off after a (fixed) period of time or after the robot 11 completes a speed reduction operation upon the controller 12 receiving a speed reduction command. The type 2 safe state provides a non-power-off shutdown function, in which when the safety module 14 determines that the robot 11 should enter the safe state, the standstill monitoring is enabled to continuously monitor the position sensor after a (fixed) period of time or after the robot 11 completes a speed reduction operation upon the controller 12 receiving a speed reduction command, and the power to the actuator is shut off upon detecting a movement of the robot.

In the embodiment, the safety function unit 15 may employ the controller 12 to monitor the robot 11 via the safety module 14, so as to enable one or more safety functions. The safety functions may include, but is not limited to, limiting an angle of movements of the segments 18, limiting a spatial position of the end 20 of the robot 11, limiting a force (or power) and limiting a speed. Upon detecting that a safety function of the robot 11 exceeds a predetermined limit and operates abnormally, the safety module 14 sets the robot 11 into the safe state. In the embodiments, various safe states of the safety module 14, various safety functions of the safety function unit 15, the enablement states of the safe states and the safety functions, and the limit parameters of the safe states and the safety functions are preset according to the requirements of each operation mode of the robot 11.

In FIG. 3, the mode switching device 17 is a multi-position rotary switch, and the mode may be indicated by a position of the rotary switch on the teaching device 13, or displayed by a light signal. The mode switching device 17 may also be a software switch, a combination of hardware switches, or a combination of software and hardware switches. For example, hardware pressing or rotating enables inputting a target mode, and software enables selecting the target mode, and then hardware enables confirmation of the selected switched mode. The mode switching device 17 may switch between a plurality of operation modes of the robot 11. In the embodiment, the operation modes include an auto mode (AUT mode), a hand-guiding mode (H mode), and a non-hand-guiding mode. The non-hand-guiding mode may include, but is not limited to, the manual reduced speed mode (T1 mode) and the manual high speed mode (T2 mode).

In the embodiment, when the mode switching device 17 is switched to the hand-guiding mode (H mode) by a user, the robot 11 enters a safe state. Since the user is required to continuously hand-guide the robot 11 after switching to the hand-guiding mode, the safety module 14 sets the hand-guiding mode to be the type 2 safe state for providing a non-power-off shutdown function, and then the user at least continues to press the enabling device 16 to exit the safe state and enables the hand-guiding function, and hand-guides the robot 11, for example, hand-guides the robot 11 to the next starting point of an operation, or hand-guides to demonstrate a working path, or hand-guides a collaborative robot to lift and place a weight. Since in the hand-guiding mode, the user works closely to the robot 11 and a strict safety protection is required. Therefore, the safety function unit 15 may impose various safety functions such as an angle limit of the segment 18, a spatial position limit of the end 20 of the robot 11, a force (or power) limit, and a speed limit to ensure worker safety.

When the mode switching device 17 is switched to the manual reduced speed mode (T1 mode) of the non-hand-guiding mode by the user, the safety module 14 presets the manual reduced speed mode to, for example, an advanced power-off shutdown function in a safe state. After the switch, the safety module 14 enters the safe state first, monitors and reacts to the enabling device 16 after confirming that the robot has stopped, the enabling device 16 being used to enable non-hand-guiding teaching or teaching verification operations, such as moving the segment 18, the robot 11, and the end 20 along with the respective axial directions of a coordinate system, performing a calibration operation on the robot 11, moving the end 20 to a specific point, or teaching a programmed operation in a single step. Since the manual reduced speed mode is a non-hand-guiding mode, the user does not work closely with the robot 11, and the strict safety protection is not required. Therefore, the safety function unit 15 may impose only safety functions such as the power (or force) limit and the speed limit.

When the mode switching device 17 is switched to the manual high speed mode (T2 mode) by the user, since a high speed movement may result in severe injuries to the user, the safety module 14 may preset the manual high speed mode to be, for example, the type 0 safe state for providing the power-off shutdown function, the safety module 14 first enters the safe state after switching, monitors and reacts to the enabling device 16 upon ensuring that the robot 11 is shut down. The enabling device 16 must be continuously pressed to enable continuous enabling for, e.g., a manual trial operation. Since the manual high speed mode is a non-manual mode, the user does not work closely with the robot 11, and the strict safety protection is not required. Therefore, the safety function unit 15 may impose safety functions such as the speed limit.

When the user employs the mode switching device 17 to switch to the auto mode (AUT mode), the user may use the controller 12 to control the robot 11 to perform automatic operations. In the auto mode, since an automatic movement may result in a severe injury to the user, the safety module 14 may set the manual high speed mode to be, for example, the type 0 safe state for providing the power-off shutdown function, and it is necessary to monitor abnormality in the automatic operation of the robot 11. When the auto mode is used in a cooperative condition, the preset safety function unit 15 may be enabled to impose various safety functions such as the spatial position limitation, force limitation, and speed limitation on the end 20 of the robot 11. When the auto mode is used in a non-cooperative condition, the preset safety function unit 15 may be disabled to ensure the operation efficiency.

When the mode switching device 17 is switched from the manual reduced speed mode, the manual high speed mode, or the auto mode to the hand-guiding mode, the robot 11 records a breakpoint of the operation program, activates a preset safety module 14 of the type 2 safe state and a preset safety function of the hand-guiding mode, and enables the hand-guiding function. In the hand-guiding mode with the specific safe state, after the user corrects a new operation by hand-guiding to teach the robot 11, the mode switching device 17 is switched back to a previous operation mode and proceeds the operation program from the breakpoint. The foregoing embodiments employ, but are not limited to, the preset safety modes and safety functions of each operation mode.

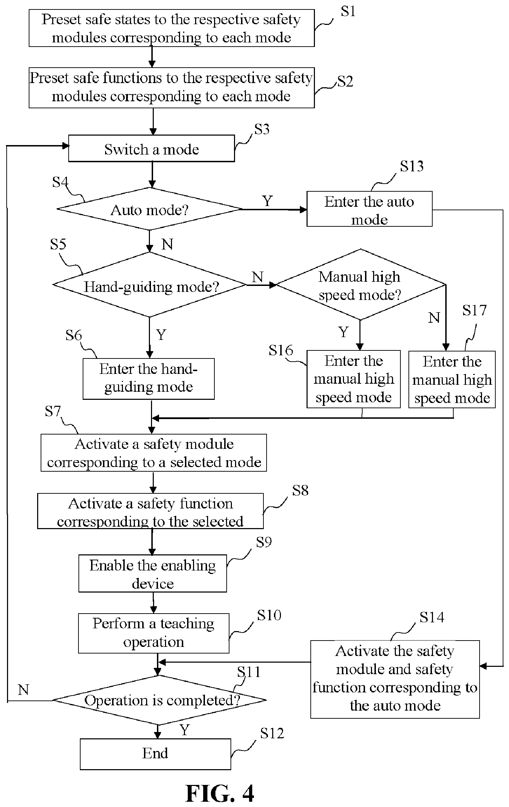

FIG. 4 is a flowchart of a safety method for teaching a robot according to an embodiment of the present invention. Steps of the safety method for teaching the robot 11 in the auto mode will be explained in detail as follows:
Step S1: preset types of safe states to the respective safety modules corresponding to each teaching mode according to the requirements of the various operation modes of the robot;
Step S2: preset safety functions to the respective safety modules corresponding to each operation mode according to the requirements of the various operation modes of the robot;
Step S3: switch a mode;
Step S4: determine whether the switched mode is the auto mode? If so, go to Step S13, and if not, go to Step S5;
Step S5: determine whether the switched mode is the hand-guiding mode? If so, go to Step S6, and if not, go to S15;
Step S6: enter the hand-guiding mode;
Step S7: activate a safety module corresponding to a selected mode, and suspend the robot and set the robot to the safe state; go to Step S8;
Step S8: activate a safety function corresponding to the selected mode; then go to Step S9;
Step S9: enable the enabling device;
Step S10: detect an ON state of the enabling device, exit the safe state of the robot, and perform a teaching operation for the robot, and then go to Step S11;
Step S11: determine whether the robot has completed the operation? If so, go to Step S12 to terminate the operation, and if not, go back to Step S3 and continue to switch the mode;
Step S12: end.
Step S13: enter the auto mode, and then go to Step S14;
Step S14: activate the safety module and safety function corresponding to the auto mode, monitor the robot, and perform an operation of automate the robot, then return to Step S11 to continue the operation;
Step S15: determine whether the switched mode is the manual high speed mode? If so, go to Step S16, and if not, go to Step S17;
Step S16: enter the manual high speed mode, and then return to Step S7 to continue the operation;
Step S17: enter the manual reduced speed mode, and then return to Step S7 to continue the operation.

Therefore, the safety system and method for teaching a robot of the present invention may switch between various operation modes of the robot via the mode switching device, and employ the enabling device to enable different preset safety modules and safety functions corresponding to each teaching mode to achieve simple switching between multiple operation modes. In addition, the safety method for teaching robots of the present invention utilizes preset safety modules and safety function switching robots corresponding to each operation mode to construct a safety system suitable for each operation mode, while ensuring that when various operation modes are switched to the hand-guiding mode, the safety system can maintain the exclusive safety module and safety function of the hand-guiding mode, to enhance the safety of users.

## Claims

1. A safety system (1) for teaching a robot (11) **characterised by** comprising:
a robot (11) comprising a plurality of segments (18) and a movable end (20), each segment (18) being provided with an actuator and a position sensor (21);
a controller (12) coupled to the robot (11), and configured to control the actuator and the position sensor (21) of the each segment (18), and move the end (20) of the robot (11);
an enabling device (16) coupled to the controller (12);
a safety module (14) provided in the controller (12), electrically or communicatively coupled to the enabling device (16), and configured to transmit an electrical signal or a communication signal according to a state of the enabling device (16), an OFF state of the enabling device (16) setting the robot (11) to a safe state, and an ON state of the enabling device (16) aborting the safe state of the robot (11);
a safety function unit (15) provided in the controller (12), electrically or communicatively coupled to the safety module (14), and configured to set the robot (11) into the safe state upon detecting that a safety function of the robot (11) exceeds a predetermined limit;
a mode switching device (17), electrically or communicatively coupled to the controller (12), the safety module (14), and the safety function unit (15), and configured to switch an operation mode of the robot (11);
wherein the mode switching device (17) switches between operation modes of the robot (11), the operation modes comprise a hand-guiding mode, an auto mode, a manual reduced speed mode, and a manual high speed mode, the safety module (14) and the safety function unit (15) enables preset safety modules (14) and preset safety functions corresponding to respective operation modes.

2. The safety system (1) of claim 1, **characterised in that** in the hand-guiding mode, the enabling device (16) is pressed to enable hand-guiding the robot (11).

3. The safety system (1) of any of the preceding claims, **characterised in that** the safety module (14) is electrically or communicatively coupled to the position sensor (21) of the each segment (18) of the robot (11), and is configured to receive a signal from the position sensor (21) to monitor the robot (11).

4. The safety system (1) of claim 3, **characterised in that** the safety module (14) operates in at least one of the following safe state types: a type 0 safe state providing a power-off shutdown function, in which power to the actuator is shut off when entering the safe state, a type 1 safe state providing an advanced power-off shutdown function, in which the power to the actuator is shut off after the robot (11) completes a speed reduction operation in a fixed period of time upon the controller (12) receiving a speed reduction command in the safe state, and a type 2 safe state providing a non-power-off shutdown function, in which a standstill monitoring is enabled to continuously monitor the position sensor (21) upon the controller (12) receiving a speed reduction command in the safe state and the robot (11) completing a speed reduction operation in the safe state, and the power to the actuator is shut off upon detecting a movement of the robot (11).

5. The safety system (1) of any of the preceding claims, **characterised in that** the safety function unit (15) enables at least one of the following safety functions: limiting an angle of movements of the segments (18), limiting a spatial position of the end (20) of the robot (11), limiting a force, and limiting a speed.

6. The safety system (1) of any of the preceding claims, **characterised in that** the mode switching device (17) is arranged in a teaching device (13) of the robot (11) or is externally connected to the controller (12).

7. The safety system (1) of any of the preceding claims, **characterised in that** the mode switching device (17) is a multi-position rotary switch indicating a mode using a switch position or a light signal.

8. The safety system (1) of any of the preceding claims, **characterised in that** the mode switching device (17) is a software switch, a combination of hardware switches, or a combination of software and hardware switches.

9. A safety method of teaching a robot (11), the safety method **characterised by** comprising:
presetting safety modules (14) corresponding to respective operation modes;
presetting safety functions corresponding to respective operation modes;
switching a mode;
determining that the switched mode is a hand-guiding mode;
entering the hand-guiding mode;
enabling the preset safety module (14) and the preset safety function for the hand-guiding mode, and suspending the robot (11) and setting the robot (11) to a safe state;
enabling an enabling device (16); and
upon detecting that the enabling device (16) is in an ON state, the robot (11) exiting the safe state and performing an operation of hand-guiding the robot (11).

10. The safety method of claim 9, **characterised by** further comprising:
after the operation is performed, if the robot (11) has completed the operation, terminating the operation, and if the robot (11) has not completed the operation, returning to the switched mode to continue the operation.

11. The safety method of claim 10, **characterised by** further comprising: if the switched mode is an auto mode, entering the auto mode, activating the preset safety function corresponding to the auto mode, monitoring the robot (11), and performing an automatic operation of the robot (11).

12. The safety method of claim 9, **characterised by** further comprising: if the switched mode is a manual reduced speed mode or a manual high speed mode, activating the preset safety function corresponding to the manual reduced speed mode or the manual high speed mode, monitoring the robot (11), and performing a teaching operation or a trial operation of the robot (11).

13. The safety method of claim 12, **characterised by** further comprising: if the mode is switched from the manual reduced speed mode, the manual high speed mode, or the auto mode to the hand-guiding mode, the robot (11) recording a breakpoint of an operation program, and activating the preset safety module (14) and the preset safety function for the hand-guiding mode, upon completion of hand-guiding the robot (11) for a teaching operation, switching back to a previous operation mode and proceeding the operation program from the breakpoint.

14. The safety method of claim 9, **characterised in that** upon detecting that the enabling device (16) is in the ON state, the robot (11) exiting the safe state and performing the operation of hand-guiding the robot (11) comprises: in the hand-guiding mode, the enabling device (16) being pressed continuously to exit the safe state and enable the hand-guiding function.

15. The safety method of claim 9, **characterised by** comprising presetting enablement states and limit parameters of the safety modules (14) and the safety functions according to requirements of each operation mode of the robot (11).

## Amended claims

### Amended claims in accordance with Rule 137(2) EPC.

1. A safety system (10) for teaching a robot (11) **characterised by** comprising:
a robot (11) comprising a plurality of segments (18) and a movable end (20), each segment (18) being provided with an actuator and a position sensor (21);
a controller (12) coupled to the robot (11), and configured to control the actuator and the position sensor (21) of the each segment (18), and move the end (20) of the robot (11);
an enabling device (16) coupled to the controller (12);
a safety module (14) provided in the controller (12), electrically or communicatively coupled to the enabling device (16), and configured to provide multiple safe states for the controller (12), transmit an electrical signal or a communication signal according to a state of the enabling device (16), an OFF state of the enabling device (16) setting the robot (11) to a safe state, and an ON state of the enabling device (16) aborting the safe state of the robot (11);
a safety function unit (15) provided in the controller (12), electrically or communicatively coupled to the safety module (14), and configured to provide multiple safety functions for the controller (12), set the robot (11) into the safe state upon detecting that a safety function of the robot (11) exceeds a predetermined limit;
a mode switching device (17), electrically or communicatively coupled to the controller (12), the safety module (14), and the safety function unit (15), and configured to switch an operation mode of the robot (11);
wherein the mode switching device (17) switches between operation modes of the robot (11), the operation modes comprise a hand-guiding mode, an auto mode, and a manual mode;
the hand-guiding mode and the auto mode are preset to different safe states and different safety functions; and
the hand-guiding mode and the manual mode are preset to different safe states and different safety functions.

2. The safety system (10) of claim 1, **characterised in that** in the hand-guiding mode, the enabling device (16) is pressed to enable hand-guiding the robot (11).

3. The safety system (10) of any of the preceding claims, **characterised in that** the safety module (14) is electrically or communicatively coupled to the position sensor (21) of the each segment (18) of the robot (11), and is configured to receive a signal from the position sensor (21) to monitor the robot (11).

4. The safety system (10) of claim 3, **characterised in that** the safety module (14) operates in at least one of the following safe state types: a type 0 safe state providing a power-off shutdown function, in which power to the actuator is shut off when entering the safe state, a type 1 safe state providing an advanced power-off shutdown function, in which the power to the actuator is shut off after the robot (11) completes a speed reduction operation in a fixed period of time upon the controller (12) receiving a speed reduction command in the safe state, and a type 2 safe state providing a non-power-off shutdown function, in which a standstill monitoring is enabled to continuously monitor the position sensor (21) upon the controller (12) receiving a speed reduction command in the safe state and the robot (11) completing a speed reduction operation in the safe state, and the power to the actuator is shut off upon detecting a movement of the robot (11).

5. The safety system (10) of any of the preceding claims, **characterised in that** the safety function unit (15) enables at least one of the following safety functions: limiting an angle of movements of the segments (18), limiting a spatial position of the end (20) of the robot (11), limiting a force, and limiting a speed.

6. The safety system (10) of any of the preceding claims, **characterised in that** the mode switching device (17) is arranged in a teaching device (13) of the robot (11) or is externally connected to the controller (12).

7. The safety system (10) of any of the preceding claims, **characterised in that** the mode switching device (17) is a multi-position rotary switch indicating a mode using a switch position or a light signal.

8. The safety system (10) of any of the preceding claims, **characterised in that** the mode switching device (17) is a software switch, a combination of hardware switches, or a combination of software and hardware switches.

9. A safety method of teaching a robot (11), the safety method **characterised by** comprising:
presetting a hand-guiding mode and an auto mode of a robot (11) to different safe states of a safety module (14), and presetting the hand-guiding mode and a manual mode of the robot (11) to different safe states of the safety module (14) ;
presetting the hand-guiding mode and the auto mode of the robot (11) to different safety functions of a safety function unit (15), and presetting the hand-guiding mode and the manual mode of the robot (11) to different safety functions of the safety function unit (15);
switching a mode;
if the mode is switched to the hand-guiding mode, enabling the safe state of the safety module (14) and the safety function of the safety function unit (15) preset for the hand-guiding mode, suspending the robot (11) and setting the robot (11) to a safe state and the safety function preset for the hand-guiding mode;
enabling an enabling device (16); and
upon detecting that the enabling device (16) is in an ON state, the robot (11) exiting the safe state and performing an operation of hand-guiding the robot (11).

10. The safety method of claim 9, **characterised by** further comprising:
after the operation is performed, if the robot (11) has completed the operation, terminating the operation, and if the robot (11) has not completed the operation, returning to the switched mode to continue the operation.

11. The safety method of claim 10, **characterised by** further comprising: if the mode is switched to the auto mode, entering the auto mode, activating the safety function of the safety function unit (15) preset for the auto mode, monitoring the robot (11), and performing an automatic operation of the robot (11).

12. The safety method of claim 9, **characterised by** further comprising: if the mode is switched to the manual mode, activating the preset safety function of the safety function unit (15) preset for the manual mode, monitoring the robot (11), and performing a teaching operation or a trial operation of the robot (11).

13. The safety method of claim 12, **characterised by** further comprising: if the mode is switched from the manual mode or the auto mode to the hand-guiding mode, the robot (11) recording a breakpoint of an operation program, and activating the safe state of the safety module (14) and the safety function of the safety function unit (15) preset for the hand-guiding mode, upon completion of hand-guiding the robot (11) for a teaching operation, switching back to a previous operation mode and proceeding the operation program from the breakpoint.

14. The safety method of claim 9, **characterised in that** upon detecting that the enabling device (16) is in the ON state, the robot (11) exiting the safe state and performing the operation of hand-guiding the robot (11) comprises: in the hand-guiding mode, the enabling device (16) being pressed continuously to exit the safe state and enable the hand-guiding function.

15. The safety method of claim 9, **characterised by** comprising presetting enablement states and limit parameters of the safety module (14) and the safety functions of the safety function unit (15) according to requirements of each operation mode of the robot (11).
